# EUROPEAN PATENT APPLICATION

(11) **EP 4 300 796 A1**
(43) Date of publication of application: **03.01.2024**
(21) Application number: 21856957.2
(22) Date of filing: 26.02.2021
(51) Int. Cl.: H02K 17/16, H02K 15/12

(54) **DYNAMO-ELECTRIC MACHINE**

(71) Applicant: Hitachi Industrial Products, Ltd., Tokyo 101-0021 (JP)
(72) Inventor: MORITA, Hiroyuki, Tokyo 101-0021 (JP); KUSHIDA, Takatoshi, Tokyo 101-0021 (JP); IKEGUCHI, Yasuhiro, Tokyo 101-0021 (JP)
(74) Representative: Mewburn Ellis LLP
(86) International application number: PCT/JP2021/007339
(87) International publication number: WO 2022/180784

(57) **Abstract**

There is provided a rotary electric machine capable of restraining unbalance of the rotor and vibration of the entire rotary electric machine. A rotary electric machine of the present invention includes a rotating axis, a rotor secured to an outer periphery of the rotating axis, and a stator placed around an outer periphery of the rotor. The rotor includes a rotor core made up of a plurality of laminated iron core pieces secured with core clamps, rotor slots provided in the rotor core, and rotor bars disposed in the rotor slots. The rotary electric machine is characterized by having metal rings disposed at both ends of the rotor bars, one part of each metal ring being brazed to the rotor bars and the other part of the metal ring being secured to the core clamps.

## Description

### Technical Field

The present invention relates to a rotary electric machine.

### Background Art

In regard to conventional rotary electric machines, a method in which rotor bars which are components of a rotor are secured with end rings is known. For example, in PTL 1 (paragraph 0010 of the specification), there is a description as below: "each rotor core 12 is provided with a plurality of rotor slots 13 disposed at predetermined intervals in a circumferential direction, and a plurality of rotor bars 14 going through these slots are secured with a plurality of annular end rings 16 at both ends thereof, so that the plurality of rotor bars 14 are secured so as to be disposed in parallel with a shaft 17.

A method in which rotor bars and end rings are secured together by brazing is also known, as described in PTL 2.

### Citation List

### Patent Literature

PTL 1: Japanese Patent Application Laid-Open No. 2018-42333
PTL 2: Japanese Patent Application Laid-Open No. Hei 7-131962

### Summary of Invention

### Technical Problem

As in PTL 2 mentioned above, when butt brazing of a rotor bar and an end ring is performed, both of these parts thermally expand in different directions when they are heated before the brazing. This results in that both the parts are pulled inward and deformed during cooling after the brazing, which induces eccentricity. As a result, there is a possibility of increasing unbalance of the rotor and vibration of the entire rotary electric machine.

In view of circumstances noted above, an object of the present invention is to provide a rotary electric machine capable of restraining unbalance of the rotor and vibration of the entire rotary electric machine.

### Solution to Problem

One aspect of the present invention to solve the problem noted above resides in a rotary electric machine that includes a rotating axis, a rotor secured to an outer periphery of the rotating axis, and a stator placed around an outer periphery of the rotor, the rotor including a rotor core made up of a plurality of laminated iron core pieces secured with core clamps, rotor slots provided in the rotor core, and rotor bars disposed in the rotor slots. The rotary electric machine is characterized by having metal rings disposed at both ends of the rotor bars, one part of each metal ring being brazed to the rotor bars and the other part of the metal ring being secured to the core clamps.

More concrete configurations of the present invention are described in the scope of claims.

### Advantageous Effects of Invention

According to the present invention, there is provided a rotary electric machine capable of restraining unbalance of the rotor and vibration of the entire rotary electric machine.

Problems, configurations, and advantageous effects other than described above will be made apparent from the following description of embodiments.

### Brief Description of Drawings

Figure 1 is an axial sectional view of a rotary electric machine of Example 1.
Figure 2 is an enlarged view of a dashed box area X in Figure 1.
Figure 3 is a diagram depicting a rotor bar, a metal ring, and a core clamp in a rotary electric machine of Example 2.
Figure 4 is a schematic diagram depicting a mechanism of how a deformation is produced by brazing a rotor bar and a metal ring together.

### Description of Embodiments

Embodiments of the present invention are described in detail with reference to the drawings, as appropriate. Note that, in the drawings presented hereinafter, identical members or equivalent members are assigned identical reference numerals and their duplicated descriptions are omitted, as appropriate. Also, the sizes and shapes of members may be represented schematically in a deformed or exaggerated manner for convenience of explanation.

### Example 1

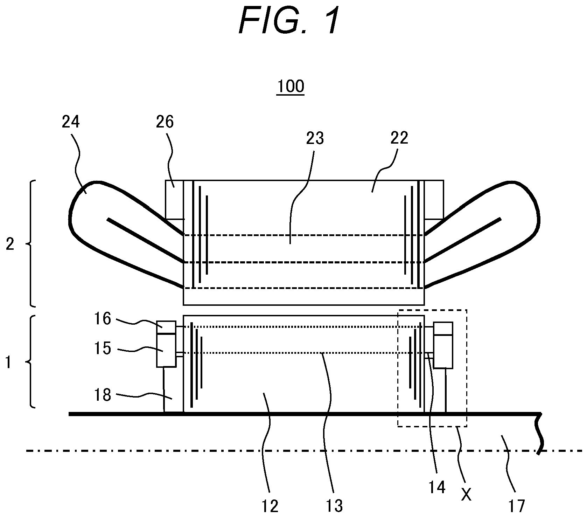

Figure 1 is an axial sectional view of a rotary electric machine of Example 1. Figure 1 depicts an example of an induction motor as a rotary electric machine. As depicted in Figure 1, the rotary electric machine 100 is equipped with a shaft (axis) 17 serving as a rotating axis, a rotor 1 secured to an outer periphery of the shaft 17, and a stator 2 placed to surround the other periphery of the rotor 1. The rotor 1 rotates about the shaft 17 as the rotating axis to make the rotary electric machine (induction motor) function.

A rotor core 12 which is a component of the rotor 1 is made up of a plurality of laminated magnetic steep plates and assembled integrally with annular rotor core clamps 18 to firmly hold both ends thereof. The rotor core 12 is provided with a plurality of rotor slots (through holes) 13 arranged at predetermined intervals in a circumferential direction (along the perimeter) of the shaft 17 and rotor bars 14 are press fit and secured in these rotor slots (through holes) 13, respectively. At both ends of these rotor bars (also called squirrel cage conductors) 14, annular metal rings 15 (also called "inner rings" or "short circuiting rings") and annular retaining rings 16 (also called "outer rings") are brazed with sliver or the like and secured to the ends of the rotor bars; a squirrel cage rotor is thus configured.

A stator 2 has an annular stator core 22 secured to a frame with the interposition of a gap with respect to the outside of the rotor 1. The stator core 22 is made up of a plurality of laminated magnetic steep plates and assembled integrally with annular stator core clamps 26 to firmly hold both ends thereof. The stator core 22 has stator slots 23 as a plurality of through holes disposed at predetermined intervals in a circumferential direction. Stator windings 24 are inserted in these stator slots 23.

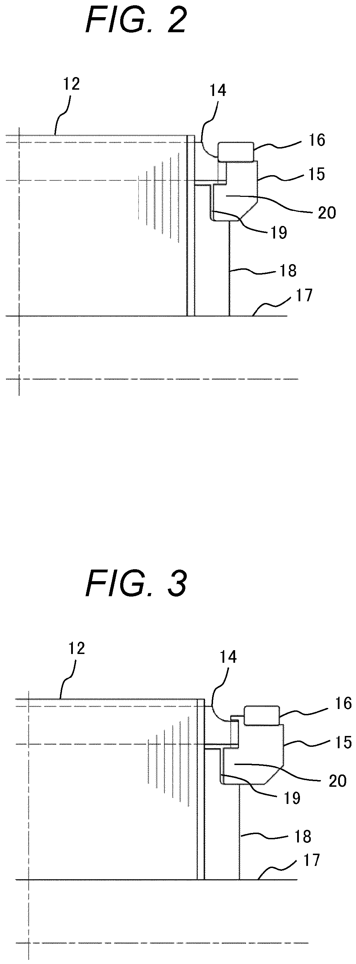

Figure 2 is an enlarged view of a dashed box area X in Figure 1. As depicted in Figure 2, the rotor core clamps 18 are disposed on the inside of the rotor slots 13 at both ends of the rotor core 12. Moreover, the rotor core clamps 18 in the present embodiment example each have an annular recess portion (thin wall portion) 19 in their outer periphery.

A side face of each of the metal rings 15 is brazed to the rotor bars 14, as described previously. The metal rings 15 in the present embodiment example are each provided with an annular protrusion portion 20, and this protrusion portion 20 is clearance-fit in the annular recess portion 19 of the rotor core clamps 18 so that both portions are secured together substantially without gaps between them. Furthermore, the rotor bars 14 are secured with the metal rings 15 and the retaining rings 16. In this way, by securing the rotor core clamps 18 and the annular recess portions 19 of the metal rings 15 together, it is possible to reduce unbalance of the rotor and restrain vibration of the entire rotatory electric machine without gaps between both to be joined together.

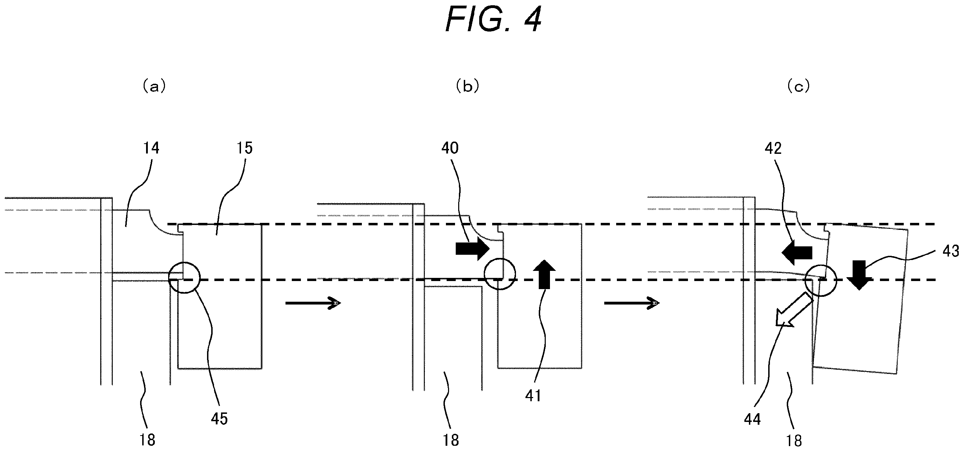

The difference between a structure of the present embodiment example and a structure of prior art is now described in greater detail. Figure 4 is a schematic diagram depicting a mechanism of how a deformation is produced by brazing a rotor bar and a metal ring together. Figure 4(a) depicts the state of a rotor bar 14, a metal ring 15, and a core clamp 18 at room temperature before being brazed together. Figure 4(b) depicts the state of the rotor bar 14 and the metal ring 15 when they are brazed together. When butt brazing of the rotor bar 14 and the metal ring 15 is performed, as the rotor bar 14 and the metal ring 15 are heated, the rotor bar 14 becomes longer in an axial direction of the rotating axis (an arrow 40 in the figure) and the metal ring 15 becomes longer in a radial direction (an arrow 41 in the figure) that is vertical to the axial direction of the rotating axis, and both are secured together in a fixation part 45 with their positions being shifted from the positions at room temperature. During subsequent cooling, force in the direction of a composite vector (an arrow 44 in the figure) of a direction of shrinkage of the rotor bar 14 (an arrow 42 in the figure) and a direction of shrinkage of the metal ring 15 (an arrow 43 in the figure) is exerted on the rotor bar 14, the metal ring 15, and the core clamp 18, and this force deforms the rotor bar 14 and the metal ring 15.

In the structure of prior art, when the rotor bar 14 and the metal ring 15 are brazed together, the heating and cooling process causes the deformation of the rotor bar 14 and the metal ring 15, as described above; whereas, in the structure of the present embodiment example, the protrusion portion 20 of the metal ring 15 mates with the recess portion of the rotor core clamp 18, closing a gap between both portions. Thus, bringing the metal ring 15 and the rotor core clamp 18 in contact with each other makes it possible to impede the deformation, even if the rotor bar 14 and the metal ring 15 are forced to deform as in Figure 4 in the course of the heating and cooling process. In consequence, it is possible to realize a rotary electric machine capable of restraining unbalance of the rotor and vibration of the entire rotary electric machine.

In the present embodiment example, because the protrusion portion 20 of the metal ring 15 is clearance-fit in the annular recess portion 19 of the rotor core clamp 18, it is possible to prevent the deformation of the rotor bar 14 without weakening the holding force of the rotor core clamp 18.

In addition, for the metal rings 15 in the present embodiment example, their surface (inward) that is inner than the rotor bar 14 and faces the rotor core 12 is tapered, and their surface (outward) that is opposite to the surface facing the rotor core 12 is also tapered. Due to the thus tapered ring surfaces, weight reduction can be achieved.

### Example 2

Figure 3 is a diagram depicting a rotor bar, a metal ring, and a core clamp in a rotary electric machine of Example 2. The difference from Example 1 lies in that the retaining ring 16 fastens only the metal ring 15. Even in a structure like this, it is possible to restrain deformation of the rotor bar 14 and the metal ring 15, as is the case for Example 1.

As described hereinbefore, it has been illustrated that, according to the present invention, it is possible to provide a rotary electric machine that realizes reducing unbalance of the rotor and restraining vibration of the entire rotary electric machine.

Note that the present invention is not limited to the embodiments described hereinbefore and various modifications are included therein. For example, the foregoing embodiments are those described in detail to explain the present invention clearly, and the invention is not necessarily limited to those including all components described. In addition, a subset of the components of an embodiment may be replaced by components of another embodiment, and components of another embodiment may be added to the components of an embodiment. In addition, for a subset of the components of each embodiment, other components may be added to the subset or the subset may be removed or replaced by other components.

### Reference Signs List

1... rotor, 2... stator, 12... rotor core, 13... rotor slot, 13... rotor bar (squirrel cage conductor), 15... short circuiting ring, 16... retaining ring, 17... shaft (axis), 17... rotor core clamp, 22... stator core, 24... stator winding, 26... stator core clamp, 40, 41, 42, 43, 44... direction of deformation, 45... fixation part in which rotor bar 14 and metal ring 15 are secured together. 100... rotary electric machine.

## Claims

1. A rotary electric machine comprising a rotating axis, a rotor secured to an outer periphery of the rotating axis, and a stator placed around an outer periphery of the rotor,
the rotor including a rotor core made up of a plurality of laminated iron core pieces secured with core clamps, rotor slots provided in the rotor core, and rotor bars disposed in the rotor slots,
the rotary electric machine having metal rings disposed at both ends of the rotor bars, one part of each metal ring being brazed to the rotor bars and the other part of the metal ring being secured to the core clamps.

2. The rotary electric machine according to claim 1,
wherein the core clamps are annular on an outer periphery side of the rotary electric machine;
the other part of the metal ring has an annular protrusion portion; and
the annular protrusion portion is clearance-fit to an outside periphery of each of the core clamps.

3. The rotary electric machine according to claim 2,
wherein the core clamps have a thin wall portion; and
the annular protrusion portion of the metal ring is clearance-fit with the thin wall portion of each of the core clamps.

4. The rotary electric machine according to any one of claims 1 to 3, wherein the metal rings have a tapered surface that is inner than the rotor bars and faces the rotor core.

5. The rotary electric machine according to any one of claims 1 to 3, wherein the metal rings have a tapered surface that is opposite to the surface facing the rotor core.
